# DEMANDE DE BREVET EUROPEEN

(11) **EP 4 180 219 A1**
(43) Date de publication de la demande: **17.05.2023**
(21) Numéro de dépôt: 21306594.9
(22) Date de dépôt: 16.11.2021
(51) Int. Cl.: B32B 1/08, B32B 3/02, B32B 7/04, B32B 5/18, B32B 27/06, B32B 27/20, B32B 27/32, B32B 27/30, B32B 27/36, F16L 59/02

(54) **COMPLEXE ISOLANT MULTICOUCHES RECYCLABLE**

(71) Demandeur: Heinzle, Olivier, Phillipe, 33700 Merignac (FR)
(72) Inventeur: Heinzle, Olivier, Phillipe, 33700 Merignac (FR)
(74) Mandataire: Tranvouez, Edern Morgan

(57) **Abrégé**

L'invention concerne un complexe (1,11,13,14,17,18) isolant formé d'au moins deux couches distinctes superposées, dont :
- au moins une couche, dite couche (4) isolante, d'une mousse isolante formée d'au moins un matériau polymère thermoplastique et formant une face, dite face (3) de contact, principale du complexe (1,11,13,14,17,18) isolant, destinée à être en contact avec un objet à isoler, et ;
- une couche, dite couche (6) protectrice, en au moins un matériau polymère thermoplastique plein, ladite couche (6) protectrice étant imperméable aux fluides et formant une face, dite face (2) apparente, principale du complexe (1,11,13,14,17,18) isolant, opposée à ladite face (3) de contact ;
le complexe (1,11,13,14,17,18) isolant présentant une interface (7) d'assemblage par thermocollage de ladite couche (4) isolante et de ladite couche (6) protectrice l'une sur l'autre, exempte de matière autre que le matériau polymère thermoplastique de la mousse isolante et que le matériau polymère thermoplastique formant ladite couche (6) protectrice.

## Description

L'invention concerne un complexe isolant -notamment un complexe isolant thermique et/ou phonique- entièrement recyclable, c'est-à-dire formé uniquement de matières susceptibles d'être recyclées et susceptible d'être fabriqué uniquement à partir de matières recyclées.

On connaît déjà des matériaux isolants thermiques contenant -notamment formés de- au moins une laine minérale, telle que par exemple de la laine de roche ou de la laine de verre. Ces laines minérales d'isolation sont connues pour être irritantes pour l'homme par contact cutané et nécessitent pour leur manipulation de prévoir des équipements de protection cutanée et l'utilisation de masque respiratoire. Ces équipements spécifiques de protection nécessaires pour la manipulation de ces isolants thermiques rendent la pose de ces isolants plus délicate et fastidieuse du fait de l'inconfort -notamment de l'inconfort dû à la chaleur- résultant de ces protections. En outre, de telles laines minérales sont obtenues par transformation de roches -notamment de roches volcaniques telle que du basalte ou de sable- liquéfiées par chauffage à très haute température puis refroidies lors de leur mise sous forme de fibres. Ces laines minérales ne sont pas écologiquement acceptables, du fait de la consommation d'énergie pour leur fabrication. Par ailleurs, ces laines minérales ne sont ni recyclables, ni susceptibles d'être fabriquées à partir de matières recyclées.

On connaît aussi des isolants thermiques à base de polymères, notamment à base de mousses de polyuréthanne. Ces matériaux polymères ne sont ni recyclables ni formés à partir de matières recyclées. Leur utilisation pose le problème de la disponibilité à moyen et long terme des ressources nécessaires à la fabrication de ces isolants thermiques, de la gestion de ces isolants et de leurs composants à l'issue de leur durée d'utilisation et de façon plus générale de l'impact de la fabrication du retraitement de ces matériaux sur l'environnement.

Dans le domaine de l'isolation thermique de conduites d'acheminement de fluides chauds ou froids, on connait aussi des manchons en mousse de polyéthylène, fendus longitudinalement et ménageant une lumière axiale adaptée pour recevoir la conduite de façon à l'isoler thermiquement. Si de tels manchons en mousse de polyéthylène peuvent être recyclables, en revanche ils ne sont ni protégés vis-à-vis d'agressions physiques extérieures, notamment vis-à-vis de chocs ou vis-à-vis de leur détérioration par des rongeurs, par exemple, ni vis-à-vis d'agressions chimiques tendant à dégrader la structure de la mousse. En outre, de tels manchons ne sont pas étanches aux fluides, notamment à l'eau de condensation formée en surface d'une conduite d'acheminement d'un fluide froid, à une température inférieure à la température atmosphérique.

L'invention vise à pallier l'ensemble de ces inconvénients.

L'invention vise donc en premier lieu à proposer un complexe isolant - notamment un complexe isolant thermique et/ou phonique- et un procédé de fabrication d'un tel complexe isolant qui permettent de minimiser l'impact négatif sur l'environnement de la fabrication du complexe isolant, de son procédé de fabrication et de son recyclage et qui satisfassent aux exigences de développement durable.

En particulier, l'invention vise donc à proposer un tel complexe isolant qui soit recyclable, c'est-à-dire dont les composants soient en majorité -voire en totalité-susceptible d'être réintroduit dans un procédé de fabrication de nouveaux produits.

À cet égard, l'invention vise à proposer un complexe isolant permettant de réduire le volume de déchets et la pollution de l'environnement susceptible d'être générée du fait de ces déchets.

Mais l'invention vise aussi à proposer un tel complexe isolant permettant d'économiser et de préserver, notamment du fait de ce recyclage, des ressources naturelles.

L'invention vise aussi à proposer un complexe isolant alternatif à l'utilisation de ressources naturelles essentiellement non renouvelables telles que la laine de roche et la laine de verre.

Mais l'invention vise aussi à proposer un complexe isolant alternatif à l'utilisation de matériaux dérivés de ressources fossiles non renouvelables telles que les mousses polyuréthannes et les produits issus de la transformation du pétrole.

Mais l'invention vise aussi à proposer un tel complexe isolant qui soit efficace en termes de pouvoir isolant, mais qui soit aussi esthétique.

Par ailleurs, l'invention vise aussi à proposer un tel complexe isolant qui soit susceptible d'être disposé dans un environnement abrité -notamment dans un bâtiment- ou dans un milieu extérieur dans lequel il est susceptible d'être exposé aux intempéries et à l'illumination solaire, notamment aux rayonnements ultraviolets.

Mais l'invention vise aussi à proposer un complexe isolant dont la pose est facilitée.

Ainsi l'invention vise à proposer un tel complexe isolant qui soit simple d'utilisation, qui soit respectueux de l'environnement et écologique, pour un coût acceptable compte tenu des avantages procurés.

Pour ce faire, l'invention concerne un complexe isolant -notamment un complexe isolant thermique et/ou phonique- formé d'au moins deux couches distinctes superposées, dont :
- au moins une couche, dite couche isolante, d'une mousse isolante formée d'une phase gazeuse dispersée dans une phase solide en au moins un matériau polymère thermoplastique, ladite couche isolante formant une face, dite face de contact, principale du complexe isolant, destinée à être en contact avec un objet à isoler, et ;
- une couche, dite couche protectrice, homogène en au moins un matériau polymère thermoplastique, ladite couche protectrice étant imperméable aux fluides et formant une face, dite face apparente, principale du complexe isolant, opposée à ladite face de contact ;
   le complexe isolant présentant une interface d'assemblage de ladite couche isolante et de ladite couche protectrice l'une sur l'autre, exempte de matière autre que le matériau polymère thermoplastique formant la phase solide de la mousse isolante et que le matériau polymère thermoplastique formant ladite couche protectrice.

Le complexe isolant selon l'invention est un complexe isolant à couches multiples -notamment un complexe isolant bicouche-, au moins deux couches du complexe isolant étant formées de deux matières distinctes. Selon certains modes de réalisation, le complexe isolant selon l'invention est dit complexe isolant « bi-matière » et « multicouches ». Au moins l'une de ces deux matières est une mousse solide isolante, formée d'une phase solide en au moins un matériau polymère thermoplastique et d'une phase gazeuse dispersée sous forme de bulles gazeuses dans des alvéoles formées dans cette phase solide, aussi nommée « thermoplastique alvéolaire ». L'autre de ces deux matières est un solide massif, non mousseux et imperméable aux fluides -notamment aux liquides et aux gaz- en au moins un matériau polymère thermoplastique formant ladite couche protectrice.

Selon certains modes de réalisation, la phase solide de la mousse solide et isolante et le solide massif non mousseux formant ladite couche protectrice sont formés du même matériau polymère thermoplastique. Cela étant, rien n'empêche que, dans d'autres modes de réalisation, la phase solide de la mousse solide et isolante et le solide massif non mousseux soient formés de deux matériaux polymères thermoplastiques distincts.

La mousse isolante formant ladite couche isolante comprend un agent moussant ou émulsifiant recyclé et recyclable.

Le complexe isolant selon l'invention est exempt de tout adhésif, notamment de toute résine d'origine fossile non recyclable, autre que le matériau polymère thermoplastique formant la mousse isolante et que le matériau polymère thermoplastique formant ladite couche protectrice. Le complexe isolant selon l'invention est donc totalement recyclable.

Selon certains modes de réalisation, l'interface d'assemblage de ladite couche isolante et de ladite couche protectrice est une interface d'assemblage à chaud -notamment par thermocollage- de ladite couche isolante et de ladite couche protectrice l'une sur l'autre. Ainsi, le complexe isolant est formé de ladite couche isolante et de ladite couche protectrice assemblées l'une à l'autre du fait d'une imbrication des matériaux polymères thermoplastiques -notamment du même matériau polymère thermoplastique- constitutif(s) de ladite couche isolante et de ladite couche de protection.

Dans certains modes de réalisation, le(s) matériau(x) polymère(s) formant ladite couche isolante est(sont) un(des) matériau(x) recyclable(s). En outre, avantageusement et selon l'invention, le(s) matériau(x) polymère(s) formant ladite couche isolante est(sont) un(des) matériau(x) recyclé(s).

Dans certains modes de réalisation, au moins un -notamment chaque-matériau polymère thermoplastique formant la phase solide de la mousse isolante est choisi dans le groupe formé des polymères acrylonitrile butadiène styrène (ABS), des polymères polyéthylène de basse densité (« *LDPE* ») et des mélanges de polymères acrylonitrile butadiène styrène (ABS) et de polymères polycarbonates (PC), des polymères poly(téréphtalate d'éthylène) (PET) et des polypropylènes (PP). Préférentiellement, au moins un -notamment chaque-matériau polymère thermoplastique de la mousse isolante est choisi dans le groupe formé des polymères acrylonitrile butadiène styrène (ABS), des polymères polyéthylène de basse densité (« *LDPE* ») et des mélanges de polymères acrylonitrile butadiène styrène (ABS) et de polymères polycarbonates (PC).

Dans certains modes de réalisation, ladite couche isolante comprend au moins un additif recyclable issu d'une ressource renouvelable non fossile. Avantageusement, l'additif recyclable est choisi parmi les additifs non polluants. Avantageusement, un tel additif recyclable est choisi parmi les farines de bois, les farines de chanvre et les farines de lin ou l'un quelconque de leurs mélanges, notamment en toutes proportions.

Dans certains modes de réalisation, le(s) matériau(x) polymère(s) formant ladite couche protectrice est(sont) un(des) matériau(x) recyclable(s). En outre, avantageusement et selon l'invention, le(s) matériau(x) polymère(s) formant ladite couche protectrice est(sont) un(des) matériau(x) recyclé(s).

Dans certains modes de réalisation, au moins un -notamment chaque-matériau polymère thermoplastique formant ladite couche protectrice est choisi dans le groupe formé des polymères acrylonitrile butadiène styrène (ABS), des polymères polyéthylène de basse densité (« *LDPE* ») et des mélanges de polymères acrylonitrile butadiène styrène (ABS) et de polymères polycarbonates (PC), des polymères poly(téréphtalate d'éthylène) (PET) et des polypropylènes (PP). Préférentiellement, au moins un -notamment chaque- matériau polymère thermoplastique formant ladite couche protectrice est choisi dans le groupe formé des polymères acrylonitrile butadiène styrène (ABS), des polymères polyéthylène de basse densité (« *LDPE* ») et des mélanges de polymères acrylonitrile butadiène styrène (ABS) et de polymères polycarbonates (PC).

Dans certains modes de réalisation, le(s) matériau(x) polymère(s) de ladite couche isolante et le(s) matériau(x) polymère(s) de ladite couche protectrice sont identiques. Le(s) matériau(x) polymère(s) de ladite couche isolante et le(s) matériau(x) polymère(s) de ladite couche protectrice sont identiques par nature. Ils peuvent aussi être identiques en proportions relatives. Le recyclage des matériaux constitutifs du complexe isolant est ainsi simplifié.

Dans certains modes de réalisation, le(s) matériau(x) polymère(s) formant la mousse isolante de ladite couche isolante est(sont) un(des) matériau(x) recyclable(s). En outre, avantageusement et selon l'invention, le(s) matériau(x) polymère(s) de la mousse isolante formant ladite couche isolante est(sont) un(des) matériau(x) recyclé(s).

Dans certains modes de réalisation, ladite face apparente du complexe isolant est colorée. Le complexe isolant selon l'invention permet d'isoler un objet sans que cette isolation soit obtenue aux dépends de l'esthétique. La coloration de ladite couche protectrice peut être une coloration dans la masse de ladite couche protectrice. Il peut aussi s'agir d'une coloration de surface par enduction. Ainsi la coloration et ou la décoration de ladite couche protectrice peut être obtenue avant la pose du complexe isolant ou après sa pose.

Dans certains modes de réalisation particuliers, le complexe isolant est de forme tubulaire et présente une lumière de réception d'un objet tubulaire - notamment d'une conduite tubulaire- à isoler, la lumière s'étendant longitudinalement par rapport au complexe isolant et étant délimitée radialement vers l'extérieur par ladite face de contact. Dans ces modes de réalisation, la lumière du complexe isolant selon l'invention présente selon toute section droite transversale, une forme et des dimensions adaptées à l'objet tubulaire à isoler. Dans ces modes de réalisation, l'objet tubulaire à isoler est parfaitement isolé sur la totalité de sa surface extérieure et est également parfaitement protégé du fait de ladite couche protectrice. Il en est d'autant plus ainsi que ladite couche isolante et ladite couche protectrice sont assemblées et que ladite couche de protection permet de maintenir efficacement l'intégrité physique de ladite couche isolante vis-à-vis d'agression extérieure, notamment de chocs et/ou vis-à-vis de déchirures.

Dans certains de ces modes de réalisation particuliers, le complexe isolant de forme tubulaire présente une fente s'étendant radialement à partir de ladite face de contact jusqu'à ladite face de protection et -longitudinalement- sur toute la longueur du complexe isolant. Une telle fente permet une mise en place facilitée du complexe isolant en recouvrement de l'objet tubulaire à isoler, de façon que l'objet tubulaire à isoler s'étende dans la lumière de réception.

Dans certains de ces modes de réalisation particuliers, ladite couche protectrice du complexe isolant de forme tubulaire forme un rabat dépourvu (exempt) de ladite couche isolante et adapté pour pouvoir -recouvrir la fente longitudinale et- assurer l'étanchéité de ladite couche protectrice. Avantageusement, le rabat est dimensionné pour pouvoir recouvrir une portion de ladite face apparente de ladite couche protectrice et pour pouvoir être fusionné avec celle-ci. L'étanchéité aux fluides du complexe isolant est assurée.

Dans certains modes de réalisation, le complexe isolant est formé d'une pluralité de tronçons de tube isolant joints bout à bout, les extrémités longitudinales en regard de deux tronçons adjacents étant maintenues jointes au moyen d'un manchon de raccordement en au moins un matériau polymère thermoplastique et thermorétractable. Dans ces modes de réalisation, le matériau polymère thermoplastique et thermorétractable du manchon est identique au matériau polymère thermoplastique formant la mousse isolant de ladite couche isolante et au matériau polymère thermoplastique formant ladite couche protectrice des tubes isolants. Avantageusement, le manchon de raccordement assure l'étanchéité de la jonction des tronçons de tube isolant.

Dans d'autres modes de réalisation particuliers d'un complexe isolant selon l'invention, ladite face de contact et ladite face de protection s'étendent chacune en regard de l'un de deux demi-espaces ouverts limités par le complexe isolant. Dans ces autres modes de réalisation, lesdites couches isolante et protectrice du complexe isolant ne sont pas refermées sur elles-mêmes. Dans ces autres modes de réalisation, le complexe isolant est de forme sensiblement plane. Le complexe isolant peut se présenter sous forme d'une plaque ou sous forme d'une bande, notamment sous forme d'une bande enroulée sur elle-même pour le stockage du complexe isolant. Dans ces autres modes de réalisation, le complexe isolant est adapté pour pouvoir être appliqué et pour isoler une paroi, notamment un mur (extérieur ou intérieur), une cloison, une toiture.

Dans certains modes de réalisation, ladite couche protectrice est en au moins un matériau élastiquement déformable par impact. Une telle couche protectrice confère au complexe isolant une bonne résistance aux chocs, notamment, mais non exclusivement, à la grêle.

Dans certains modes de réalisation, ladite couche protectrice est en un matériau élastiquement déformable en flexion et adapté pour ramener élastiquement ladite couche isolante dans une position dans laquelle ladite couche isolante est maintenue au contact de l'objet à isoler.

Dans certains modes de réalisation préférentiels, ladite couche protectrice est moins épaisse que ladite couche isolante.

L'invention s'étend aussi à un procédé de fabrication d'un complexe isolant selon l'invention et dans lequel :
- on forme par extrusion ladite couche isolante ;
- on forme par extrusion ladite couche protectrice ;
- on assemble -notamment par thermocollage- ladite couche isolante et ladite couche protectrice sans apport de matière autre que le matériau polymère thermoplastique de la mousse isolante formant ladite couche isolante et que le matériau polymère thermoplastique formant ladite couche protectrice.

Dans certains modes de réalisation préférentiels, on forme ladite couche isolante et ladite couche protectrice par coextrusion à chaud de façon à superposer et assembler ladite couche isolante et ladite couche protectrice par collage de la mousse isolante et de ladite couche protectrice solide l'une sur l'autre du fait de la coextrusion à chaud et sans apport de matière autre que le matériau polymère thermoplastique de la mousse isolante formant ladite couche isolante et que le matériau polymère thermoplastique formant ladite couche protectrice -notamment sans aucun apport de matière-. Dans certains modes de réalisation, on forme la mousse isolante de ladite couche isolante par extrusion à chaud au contact de ladite couche protectrice.

Dans certains autres modes de réalisation d'un procédé selon l'invention, on chauffe la face opposée à ladite face de contact de ladite couche isolante et/ou la face opposée à ladite face apparente de ladite couche protectrice à une température propre à conduire à une fusion partielle d'une couche surfacique du matériau polymère thermoplastique formant la mousse isolante et/ou d'une couche surfacique du matériau polymère thermoplastique de ladite couche protectrice et met en contact l'une avec l'autre ces deux couches surfaciques, ce par quoi ladite couche isolante et ladite couche protectrice sont assemblées.

On forme ladite couche isolante par tout moyen connu en lui-même de l'homme du métier, notamment par compression à chaud d'un matériau polymère thermoplastique en présence d'une composition gazeuse -notmment d'air-comprimé(e) suivie d'une détente de façon à permettre une expansion de la mousse isolante.

L'invention s'étend aussi à toute utilisation d'un complexe isolant selon l'invention pour isoler un objet à isoler.

L'invention concerne également un complexe isolant, un procédé de fabrication d'un tel complexe isolant et toute utilisation d'un complexe isolant caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante donnée à titre non limitatif de certains de ses modes de réalisation possibles et qui se réfère aux figures annexées dans lesquelles :
[Fig.1] est une vue en perspective d'un premier mode de réalisation d'un complexe isolant selon l'invention, le complexe isolant étant de forme tubulaire ;
[Fig.2] est une vue en perspective d'un deuxième mode de réalisation d'un complexe isolant tubulaire selon l'invention ;
[Fig.3] est une vue en perspective d'un deuxième état du premier mode de réalisation d'un complexe isolant selon l'invention représenté en [Fig.2] ;
[Fig.4] est une vue en perspective avec arraché du premier mode de réalisation d'un complexe isolant selon l'invention représenté en [Fig.1] ;
[Fig.5] est une vue en perspective d'une variante du complexe isolant selon l'invention représenté en [Fig.3] et formant un coude ;
[Fig.6] est une vue en perspective d'une variante du complexe isolant selon l'invention représenté en [Fig.3] et formant un « T » de raccordement ;
[Fig.7] est une vue de face d'un assemblage de deux tronçons de complexe isolant tubulaire selon l'invention au moyen d'un manchon thermorétractable ;
[Fig.8] est une vue en perspective d'un deuxième mode de réalisation d'un complexe isolant selon l'invention, le complexe isolant étant sous forme d'une bande isolante souple enroulable sur elle-même ;
[Fig.9] est une vue en perspective d'un troisième mode de réalisation d'un complexe isolant selon l'invention, le complexe isolant étant sous forme d'un complexe de serrage, et ;
[Fig. 10] est une vue en perspective d'un quatrième mode de réalisation d'un complexe isolant selon l'invention, le complexe isolant étant sous forme d'une plaque isolante.

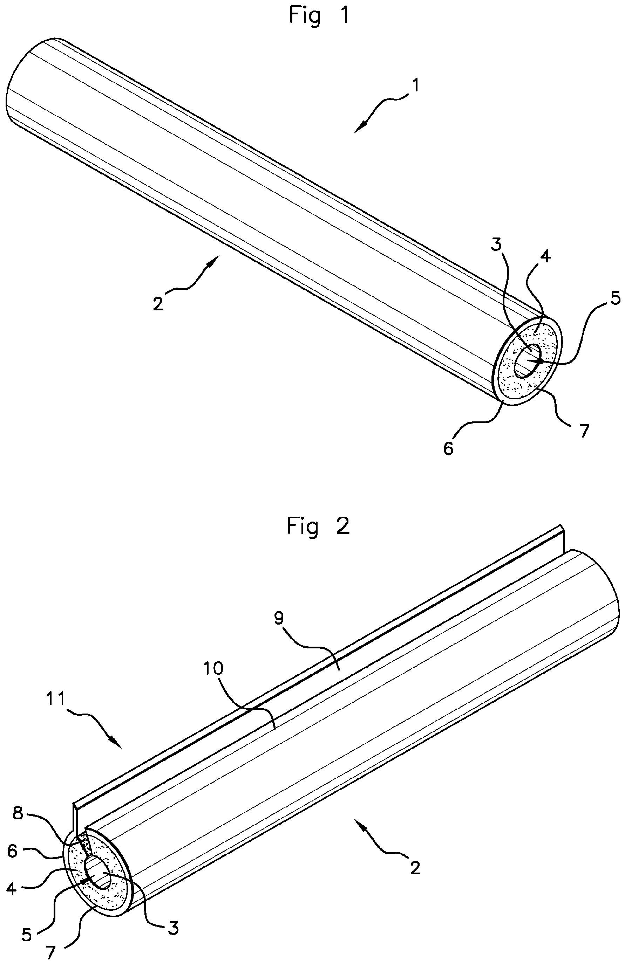

Un premier mode de réalisation d'un complexe isolant selon l'invention représenté en [Fig.1] est un tronçon de complexe isolant de forme tubulaire, dit tube 1 calorifuge. Ledit tube 1 calorifuge peut présenter toutes dimensions adaptées aux dimensions de la conduite dont l'isolation thermique est envisagée. À titre d'exemple, il peut présenter un diamètre en section droite transversale compris entre 10 mm et 400 mm ou plus selon le diamètre de la conduite dont l'isolation thermique est envisagée. Ledit tube 1 calorifuge peut se présenter sous une forme enroulée sur une bobine et présenter une longueur de plusieurs mètres ou plusieurs dizaines de mètres. Ledit tube 1 calorifuge peut être ainsi sectionné en tronçons de longueur adaptée à la longueur de la partie de conduite à isoler. Ledit tube 1 calorifuge présente une première face, dite face 2 apparente, principale opposée à une face, dite face 3 de contact, destinée à être mise en contact avec la conduite à isoler. Ladite face 2 apparente est sensiblement lisse au toucher. Elle peut être blanche, grise ou noire ou présenter toute couleur choisie. Ledit tube 1 calorifuge est un tube dont la paroi est formée d'une pluralité de couches sensiblement concentriques de matériaux distincts.

Ledit tube 1 calorifuge présente une couche, dite couche 4 isolante, interne formée d'une mousse isolante solide d'au moins un matériau polymère thermoplastique. La mousse isolante solide peut être de tout type. Il peut s'agir d'une mousse à cellules ouvertes ou d'une mousse à cellules fermées. En particulier, la mousse isolante est choisie pour que ledit tube calorifuge présente une souplesse en flexion suffisante pour permettre un ajustement dudit tube calorifuge à toute forme de conduite à isoler. Ladite couche 4 isolante ménage une lumière 5 axiale adaptée pour recevoir la conduite à isoler. Ladite couche 4 isolante présente une épaisseur adaptée au besoin d'isolation requis. Cette épaisseur peut être comprise, selon les besoins d'isolation, entre un à plusieurs centimètres et quelques dizaines de centimètres, notamment comprise entre un centimères et vingt centimètres. Le matériau polymère thermoplastique formant ladite couche 4 isolante est un matériau recyclé et recyclable. Avantageusement, ce matériau est choisi pour pouvoir subir jusqu'à trois cycles successifs ou plus de recyclage. Ainsi, la mousse isolante formant ladite couche 4 isolante est formée par extrusion à chaud, selon un procédé connu de l'homme du métier, d'un matériau polymère thermoplastique recyclé, auquel aura été ajouté, le cas échéant, un émulsifiant ou agent moussant recyclé et recyclable et/ou un additif recyclé et recyclable tel que de la farine (ou poudre) de bois et/ou une poudre de chanvre et/ou une poudre de lin. Le matériau polymère thermoplastique recyclé formant la mousse isolante peut être un polymère acrylonitrile butadiène styrène (ABS), un polymère polyéthylène de basse densité (« *LDPE* ») ou un mélange de polymères acrylonitrile butadiène styrène et de polymères polycarbonates (PC).

Ledit tube 1 calorifuge présente une couche, dite couche 6 protectrice, externe, imperméable aux fluides, notamment aux liquides et en particulier à l'eau de condensation susceptible de s'écouler à partir d'une conduite de fluide froid. Ladite couche 6 protectrice forme une face, dite face 2 apparente, principale du tube 1 calorifuge, opposée à ladite face 3 de contact. Ladite couche 6 protectrice est formée d'au moins un matériau polymère thermoplastique recyclé et qui est lui-même recyclable. Avantageusement, ce(s) matériau(x) est(sont) choisi(s) pour pouvoir subir jusqu'à trois cycles ou plus de recyclage successifs. Ladite couche 6 protectrice présente une épaisseur adaptée pour être déformable sous contrainte. Cette épaisseur peut être variable selon les matériaux et comprise entre quelques millimètres -notamment deux millimètres- et quelques dizaines de millimètres -notamment vingt millimètres. Au moins un - notamment chaque- matériau polymère thermoplastique de ladite couche 6 protectrice est choisi dans le groupe formé des polymères acrylonitrile butadiène styrène (ABS), des polymères polyéthylène de basse densité (« *LDPE* ») et des mélanges de polymères acrylonitrile butadiène styrène et de polymères polycarbonates (PC). Avantageusement, ces matériaux sont choisis pour pouvoir subir jusqu'à trois cycles ou plus de recyclage successifs.

Ledit tube 1 calorifuge présente une interface 7 d'assemblage de ladite couche 4 isolante et de ladite couche 6 protectrice par collage -notamment par thermocollage- l'une sur l'autre de ladite couche 6 protectrice en surface de ladite couche 4 isolante. Avantageusement, cette interface 7 d'assemblage est exempte de tout adhésif distinct du matériau polymère thermoplastique formant la mousse isolante de la couche 4 isolante et du matériau polymère thermoplastique formant ladite couche 6 protectrice. Ledit tube 1 calorifuge est ainsi exempt de toute matière non recyclable. En outre ledit tube 1 calorifuge est exempt de toute matière non recyclée. Par ailleurs, ledit tube 1 calorifuge est choisi pour être suffisamment élastique en traction longitudinale et pour s'adapter à la dilatation/rétractation des conduites isolées selon le régime de basse et de haute température.

Un deuxième mode de réalisation d'un complexe isolant selon l'invention représenté en [Fig.2] est un tronçon de complexe isolant de forme tubulaire, dit tube 1 calorifuge fendu longitudinalement et radialement selon une épaisseur seulement de ladite couche 4 isolante et de ladite couche 6 protectrice. Ledit tube 1 calorifuge présente une fente 8 longitudinale permettant de placer ledit tube 1 calorifuge de façon que la conduite à isoler s'étende dans la lumière 5 axiale du tube 1 calorifuge. La couche 6 protectrice présente une extension radiale formant un rabat 9 exempt de ladite couche 4 isolante et adapté pour pouvoir recouvrir la fente 8 longitudinalement et assurer l'étanchéité de ladite couche 6 protectrice vis-à-vis de fluides. Avantageusement le rabat 9 est dimensionné pour pouvoir recouvrir une portion 10 de ladite face 2 apparente de ladite couche 6 protectrice et pour pouvoir être fusionné avec celle-ci. Avantageusement, le rabat 9 et la portion 10 de couche 6 protectrice sous-jacente peuvent être fusionnées l'une avec l'autre par la chaleur -notamment par poinçonnement thermique-. On réalise un tel poinçonnement thermique par l'application d'un faisceau laser en contrôlant l'énergie fournie par ce laser. On ajuste la température et le temps de chauffage de façon à limiter la fusion du matériau de ladite couche protectrice à une partie seulement d'épaisseur de ladite couche 6 protectrice. Avantageusement, on fusionne le rabat 9 et la portion 10 de couche 6 protectrice sous-jacente l'une avec l'autre par la chaleur avec apport de matière thermoplastique recyclée et recyclable ou sans un tel apport. En tout état de cause, on fusionne le rabat 9 et la portion 10 de couche 6 protectrice sous-jacente l'une avec l'autre sans apport d'adhésif. On choisit le procédé de fusion selon le régime de température des réseaux de conduites à isoler et/ou selon les chantiers. De cette façon, la couche 6 protectrice n'est pas perforée et ledit tube 1 calorifuge est étanche aux fluides.

Rien n'empêche cependant de prévoir d'associer le rabat 9 et la portion 10 de couche 6 protectrice sous-jacente au moyen de rivets en au moins un matériau polymère thermoplastique recyclé et recyclable, notamment en au moins un matériau formant la mousse isolante et/ou la couche protectrice. Par exemple, les rivets peuvent être formés d'acrylonitrile butadiène styrène (ABS), d'un polymère polyéthylène de basse densité (« *LDPE* ») et d'un mélange de polymères acrylonitrile butadiène styrène et de polymères polycarbonates (PC). Rien n'empêche cependant de prévoir d'associer le rabat 9 et la portion 10 de couche 6 protectrice sous-jacente au moyen de rivets en matériau polymère thermoplastique qui n'est pas issu d'une ressource fossile.

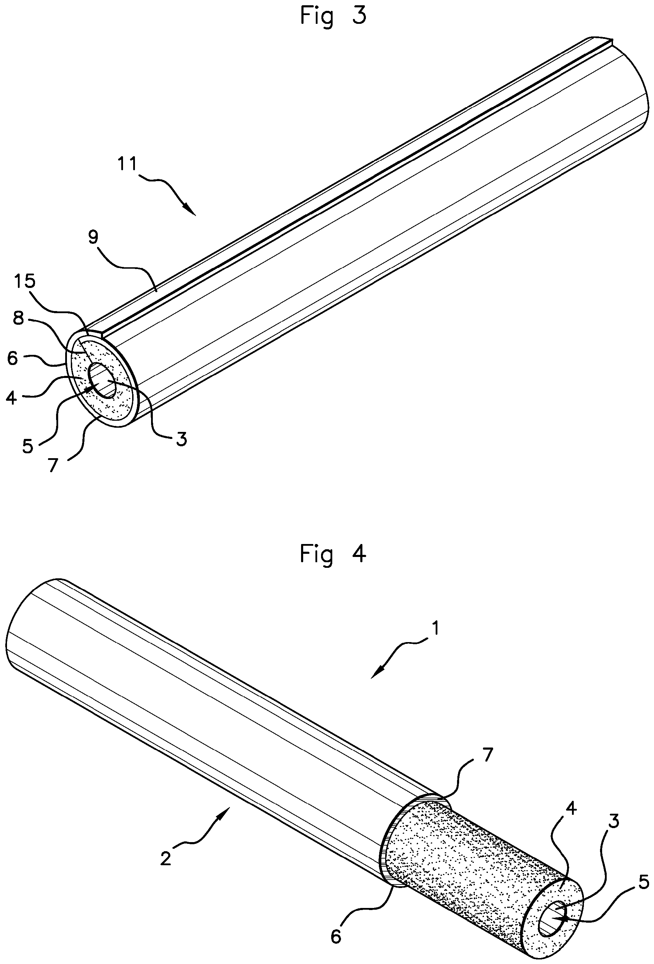

Un tel tube 1 calorifuge présentant une fente 8 longitudinale et un rabat 9 thermocollé sur une portion 15 de collage de rabat sur ladite couche 6 protectrice est représenté en [Fig.3]. La conduite à isoler s'étendant dans la lumière 5 n'est pas représentée pour des raisons de clarté de l'exposé.

Une vue en perspective avec arraché d'un tube 1 calorifuge selon l'invention est représenté en [Fig.4] en référence au tube 1 calorifuge représenté en [Fig.1].

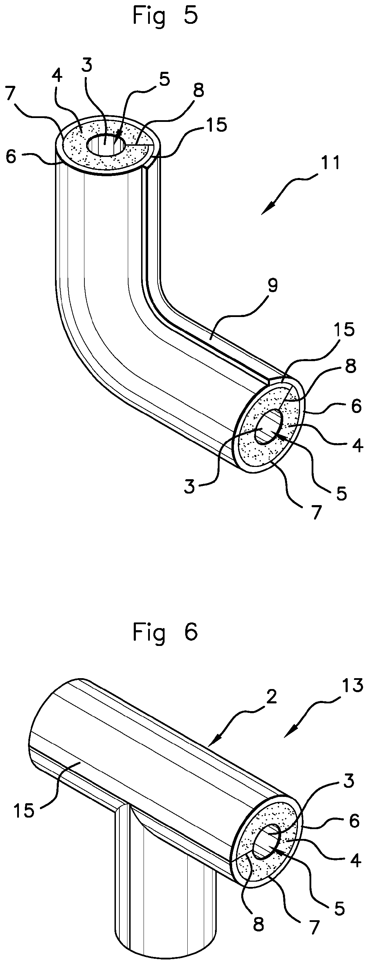

Une vue en perspective d'un tube 1 calorifuge selon l'invention est représenté en [Fig.5] en référence au tube 1 calorifuge représenté en [Fig.3] présentant une fente 8 longitudinale obstruée par un rabat 9 fusionné avec ladite couche 6 protectrice sur une zone 15 de collage, ledit tube 1 calorifuge formant un coude.

Une vue en perspective d'un tube 1 calorifuge selon l'invention est représenté en [Fig.6] et formant un raccord 13 isolant en « T » d'isolation d'un raccordement en « T » de deux conduites (non représentées) à isoler, chaque partie du raccord en « T » d'isolation selon l'invention présentant une fente 8 longitudinale adaptée pour permettre l'insertion d'une partie en « T » d'une conduite à isoler et son isolation. Rien n'empêche de prévoir qu'un tel raccord 13 isolant en « T » présente un rabat longitudinal permettant de recouvrir longitudinalement la fente 8, ce rabat pouvant être fusionné avec ladite couche 6 protectrice.

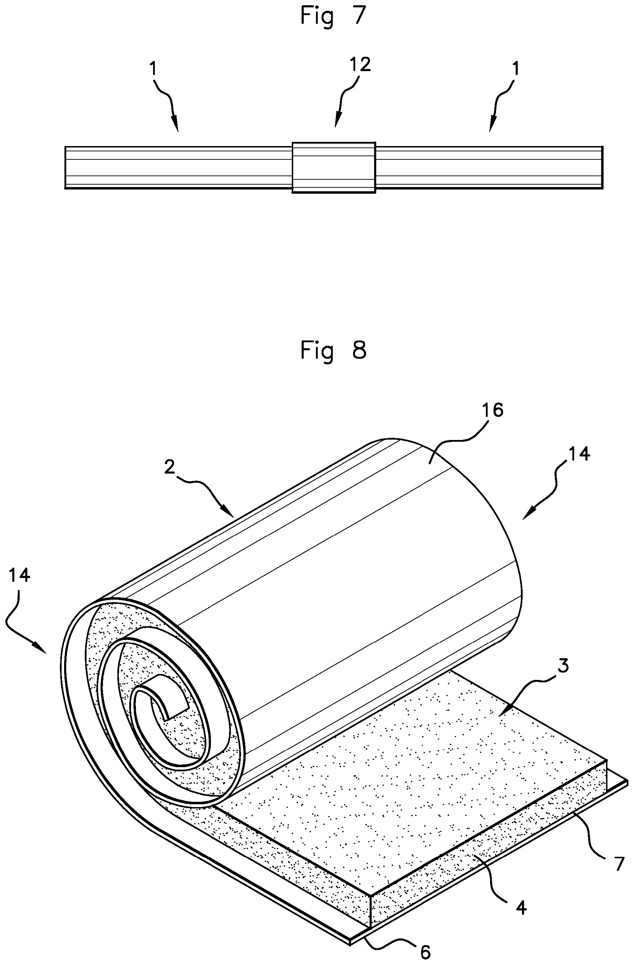

Une vue à plat d'un assemblage de deux tubes 1 calorifuges est représenté en [Fig.7]. Cet assemblage comprend deux tubes 1 calorifuges coaxiaux et un manchon 12 rétracté par la chaleur (thermorétracté) en matériau polymère thermoplastique recyclé assurant une jonction étanche entre les deux tubes 1 calorifuges du fait de cette rétractation. Le matériau polymère thermoplastique recyclé formant le manchon peut être choisi dans le groupe de matériau comprenant les polymères acrylonitrile butadiène styrène (ABS), les polymères polyéthylène de basse densité (« *LDPE* ») et les mélanges de polymères acrylonitrile butadiène styrène (ABS) et de polymères polycarbonates (PC), les polymères poly(téréphtalate d'éthylène) (PET) et les polypropylènes (PP). Préférentiellement, le matériau polymère thermoplastique recyclé formant le manchon est choisi dans le groupe formé des polymères acrylonitrile butadiène styrène (ABS), des polymères polyéthylène de basse densité (« *LDPE* ») et des mélanges de polymères acrylonitrile butadiène styrène (ABS) et de polymères polycarbonates (PC)

Une vue en perspective d'un complexe 14 isolant selon une deuxième mode de réalisation de l'invention est représenté en [Fig.8]. Dans ce mode de réalisation le complexe isolant selon l'invention est une bande 14 isolante dont une partie 16 est enroulée sur elle-même selon un axe d'enroulement orthogonal à l'axe d'allongement de la bande 14 isolante. Une telle bande 14 isolante comprend une couche 4 isolante et une couche 6 protectrice superposées l'une sur l'autre et assemblées l'une sur et avec l'autre par une interface 7 d'assemblage, chacune des faces libres des couches 4 isolante et 6 protectrice s'étendant en regard de l'un de deux demi-espaces ouverts limités par le complexe 14 isolant. Lesdites couches 4 isolante et 6 protectrice du complexe 14 isolant ne sont pas refermées sur elles-mêmes. Dans ce mode de réalisation, le complexe isolant sous forme d'une bande 14 isolante est adapté pour pouvoir être appliqué et pour isoler une paroi, notamment un mur (extérieur ou intérieur), une cloison, une toiture. Une telle bande isolante peut présenter toutes dimensions. Avantageusement, la largeur de la bande isolante, de ladite couche 6 protectrice et de ladite couche 4 isolante sont choisies pour permettre une insertion d'un tronçon de bande isolante entre des montants ou rails de structure d'une paroi à isoler, telle qu'une cloison, un mur ou une charpente. Avantageusement, la largeur de la bande est une largeur standardisée d'une valeur de 800 mm. Ladite couche 4 isolante et ladite couche 6 de protection sont formées chacun d'un matériau polymère thermoplastique recyclé et recyclable. L'interface 7 d'assemblage de ladite couche 4 isolante et de ladite couche 6 de protection est formée par thermocollage de ladite couche 4 isolante et de ladite couche 6 de protection sans apport de matière, notamment sans apport de matière autre que le matériau polymère thermoplastique de la mousse isolante et/ou que le matériau polymère thermoplastique formant ladite couche 6 protectrice.

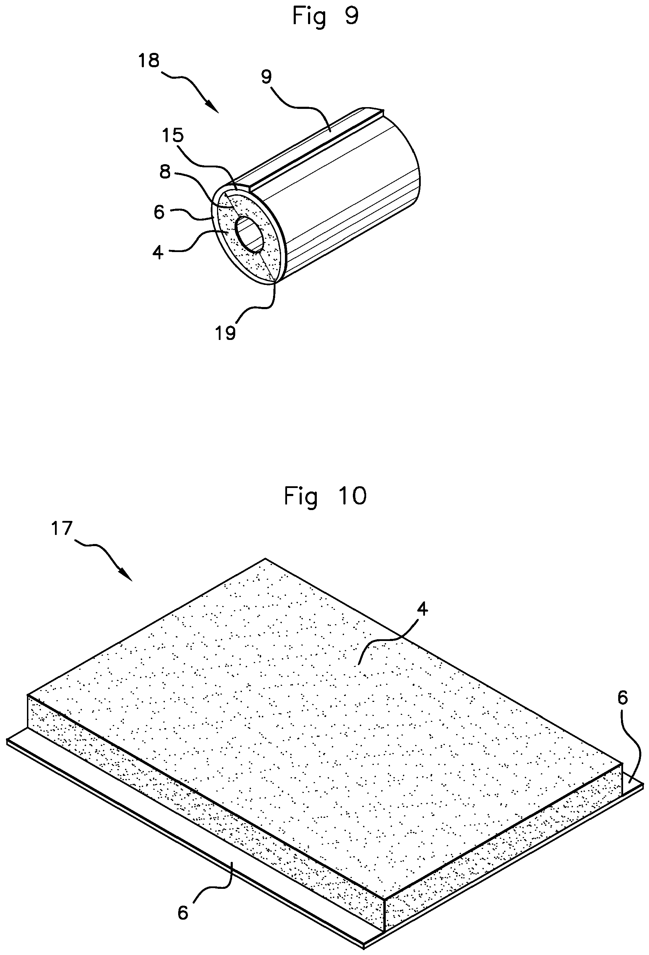

Une vue en perspective d'un complexe 14 isolant selon une troisième mode de réalisation de l'invention est représenté en [Fig.9]. Dans ce mode de réalisation, le complexe isolant est un complexe, dit complexe 18 de serrage, formé d'une couche 6 de protection formant une coque en un matériau présentant une rigidité sous contrainte radiale suffisante pour permettre un serrage dudit complexe 18 de serrage dans un collier de serrage supportant la conduite à isoler. Ledit complexe 18 de serrage présente un rabat 9 longitudinal exempt de ladite couche 4 isolante et adapté pour pouvoir recouvrir la fente 8 longitudinalement et assurer l'étanchéité de ladite couche 6 protectrice vis-à-vis de fluides. Ledit complexe 18 de serrage présente une zone 19 longitudinale préférentielle de pliage permettant l'ouverture du complexe de serrage, son positionnement autour de la conduite à serrer et l'enserrement de ladite conduite.

Une vue en perspective d'un complexe 17 isolant selon une quatrième mode de réalisation de l'invention est représenté en [Fig.10]. Dans ce mode de réalisation le complexe isolant selon l'invention est une plaque 17 isolante dans laquelle ladite couche 6 protectrice présente une rigidité adaptée pour que la plaque 17 soit autoportante, c'est-à-dire qu'elle conserve sensiblement sa forme plane sous son propre poids. Ladite couche 6 protectrice et ladite couche 4 isolante sont superposées l'une sur l'autre et assemblées l'une sur l'autre par une interface 7 d'assemblage, chacune des faces libres des couches 4 isolante et 6 protectrice s'étendant en regard de l'un de deux demi-espaces ouverts limités par le complexe 17 isolant. Lesdites couches 4 isolante et 6 protectrice du complexe 17 isolant ne sont pas refermées sur elles-mêmes. Dans ce mode de réalisation, le complexe 17 isolant sous forme d'une plaque est adapté pour pouvoir être appliqué et pour isoler une paroi, notamment un mur (extérieur ou intérieur), une cloison, une toiture. Une telle plaque 17 isolante peut présenter toutes dimensions. Avantageusement, la largeur de la plaque 17 isolante, de ladite couche 6 protectrice et de ladite couche 4 isolante sont choisies pour permettre une insertion d'une plaque 17 isolante entre des montants ou rails de structure d'une paroi à isoler, telle qu'une cloison, un mur ou une charpente. Une telle plaque 17 isolante permet d'assurer l'isolation et l'étanchéité du revêtement isolant. Avantageusement, la largeur de la bande est une largeur standardisée d'une valeur de 800 mm et sa longueur est une longueur standardisée d'une valeur de 1200 mm. Ladite couche 4 isolante et ladite couche 6 de protection sont formées chacun d'un matériau polymère thermoplastique recyclé et recyclable. L'interface 7 d'assemblage de ladite couche 4 isolante et de ladite couche 6 de protection est formée par thermocollage ou soudure de ladite couche 4 isolante et de ladite couche 6 protectrice l'une sur l'autre, sans apport de matière, notamment sans apport de matière autre que le matériau polymère thermoplastique de la mousse isolante et/ou que le matériau polymère thermoplastique formant ladite couche 6 protectrice

Dans un mode de réalisation d'un procédé selon l'invention de fabrication d'un complexe isolant selon l'invention :
- on forme par extrusion ladite couche 4 isolante, puis ;
- on forme par extrusion ladite couche 6 protectrice, puis ;
- on assemble par thermocollage ladite couche 4 isolante et ladite couche 6 protectrice sans apport de matière autre que le matériau polymère thermoplastique de la mousse isolante et que le matériau polymère thermoplastique formant ladite couche 6 protectrice.

Rien n'empêche cependant de fabriquer un complexe isolant selon l'invention par coextrusion de pâtes précurseurs de ladite couche isolante et de ladite couche protectrice au travers d'une filière de coextrusion associées à deux extrudeurs. Rien n'empêche non plus d'ajuster la température des filières de façon à permettre un assemblage par thermocollage de la mousse isolante de ladite couche isolante sur ladite couche protectrice.

Rien n'empêche de prévoir que le complexe isolant selon l'invention présente plus de deux couches, notamment plus d'une couche de mousse isolante, par exemple deux couches de mousse isolante de densités distinctes.

Un complexe isolant selon l'invention est principalement destiné au secteur du bâtiment, de la construction, de la rénovation et de l'entretien, de l'isolation et de la protection de conduites de fluides d'un réseau de conduites de fluides, d'une chaufferie, d'une gaine technique notamment, qu'il s'agisse de sites industriels, de logements, d'établissements de soins, par exemple.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Complexe (1,11,13,14,17,18) isolant formé d'au moins deux couches distinctes superposées, dont :
- au moins une couche, dite couche (4) isolante, d'une mousse isolante formée d'une phase gazeuse dispersée dans une phase solide en au moins un matériau polymère thermoplastique, ladite couche (4) isolante formant une face, dite face (3) de contact, principale du complexe (1,11,13,14,17,18) isolant, destinée à être en contact avec un objet à isoler, et ;
- une couche, dite couche (6) protectrice, homogène en au moins un matériau polymère thermoplastique, ladite couche (6) protectrice étant imperméable aux fluides et formant une face, dite face (2) apparente, principale du complexe (1,11,13,14,17,18) isolant, opposée à ladite face (3) de contact ;
le complexe (1,11,13,14,17,18) isolant présentant une interface (7) d'assemblage de ladite couche (4) isolante et de ladite couche (6) protectrice l'une sur l'autre, exempte de matière autre que le matériau polymère thermoplastique formant la phase solide de la mousse isolante et que le matériau polymère thermoplastique formant ladite couche (6) protectrice.

2. Complexe (1,11,13,14,17,18) isolant selon la revendication 1, **caractérisé en ce qu'**au moins un matériau polymère thermoplastique formant la phase solide de la mousse isolante est choisi dans le groupe formé des polymères acrylonitrile butadiène styrène, des polymères polyéthylène de basse densité et des mélanges de polymères acrylonitrile butadiène styrène et de polymères polycarbonates, des polymères poly(téréphtalate d'éthylène) et des polypropylènes.

3. Complexe (1,11,13,14,17,18) isolant selon l'une des revendications 1 ou 2, **caractérisé en ce que** ladite couche (4) isolante comprend au moins un additif recyclable choisi parmi les farines de bois, les farines de chanvre et les farines de lin ou l'un quelconque de leurs mélanges.

4. Complexe (1,11,13,14,17,18) isolant selon l'une des revendications 1 à 3, **caractérisé en ce qu'**au moins un matériau polymère thermoplastique de ladite couche (6) protectrice est choisi dans le groupe formé des polymères acrylonitrile butadiène styrène, des polymères polyéthylène de basse densité et des mélanges de polymères acrylonitrile butadiène styrène et de polymères polycarbonates, des polymères poly(téréphtalate d'éthylène) et des polypropylènes.

5. Complexe (1,11,13,14,17,18) isolant selon l'une des revendications 1 à 4, **caractérisé en ce que** le(s) matériau(x) polymère(s) de ladite couche (4) isolante et le(s) matériau(x) polymère(s) de ladite couche (6) protectrice sont identiques.

6. Complexe (1,11,13,14,17,18) isolant selon l'une des revendications 1 à 5, **caractérisé en ce que** le(s) matériau(x) polymère(s) de la mousse isolante formant ladite couche isolante est(sont) un(des) matériau(x) recyclable(s).

7. Complexe (1,11,13,14,17,18) isolant selon l'une des revendications 1 à 6, **caractérisé en ce que** le(s) matériau(x) polymère(s) formant ladite couche protectrice est(sont) recyclable(s).

8. Complexe (1,11,13,14,17,18) isolant selon l'une des revendications 1 à 7, **caractérisé en ce que** ladite face apparente est colorée.

9. Complexe (1,11,13,18) isolant selon l'une des revendications 1 à 8, **caractérisé en ce qu'**il est de forme tubulaire et présente une lumière (5) de réception d'un objet tubulaire à isoler, la lumière (5) s'étendant longitudinalement par rapport au complexe (1,11,13,18) isolant et étant délimitée radialement vers l'extérieur par ladite face (3) de contact.

10. Complexe (1,11,13,18) isolant selon la revendication 9, **caractérisé en ce qu'**il présente une fente (8) s'étendant radialement à partir de ladite face (3) de contact jusqu'à ladite face (2) de protection et - longitudinalement- sur toute la longueur du complexe (1,11,13,18) isolant.

11. Complexe (1,11,13,18) isolant selon la revendication 10, **caractérisé en ce que** ladite couche (6) protectrice forme un rabat (9) exempt de ladite couche (4) isolante adapté pour pouvoir assurer l'étanchéité de ladite couche (6) protectrice.

12. Complexe (17,14) isolant selon l'une des revendications 1 à 8, **caractérisé en ce que** ladite face (2) de contact et ladite face (2) apparente s'étendent chacune en regard de l'un de deux demi-espaces ouverts limités par le complexe (17,14) isolant.

13. Complexe (1,11,13,14,17,18) isolant selon l'une des revendications 1 à 12, **caractérisé en ce que** ladite couche (6) protectrice est en un matériau élastiquement déformable en flexion et adapté pour ramener élastiquement ladite couche (4) isolante dans une position dans laquelle ladite couche (4) isolante est maintenue au contact de l'objet à isoler.

14. Complexe (1,11,13,14,17,18) isolant selon l'une des revendications 1 à 13, **caractérisé en ce que** ladite couche (6) protectrice est moins épaisse que ladite couche (4) isolante.

15. Procédé de fabrication d'un matériau (1,11,13,14,17,18) isolant selon l'une des revendications 1 à 14, dans lequel :
- on forme par extrusion ladite couche (4) isolante ;
- on forme par extrusion ladite couche (6) protectrice, puis ;
- on assemble ladite couche (4) isolante et ladite couche (6) protectrice sans apport de matière autre que le matériau polymère thermoplastique de la mousse isolante et que le matériau polymère thermoplastique formant ladite couche (6) protectrice.
